# EUROPEAN PATENT APPLICATION

(11) **EP 4 290 204 A1**
(43) Date of publication of application: **13.12.2023**
(21) Application number: 21924518.0
(22) Date of filing: 12.07.2021
(51) Int. Cl.: G01M 7/02

(54) **METHOD AND DEVICE FOR VIBROACOUSTIC ANALYSIS OF INDUSTRIAL EQUIPMENT**

(30) Priority: 04.02.2021 RU 2021102562
(71) Applicant: UZDAROJI AKCINE BENDROVE "NEUROTECHNOLOGIJOS", 09320 Vilnius (LT)
(72) Inventor: SMETANKIN, Alexander, LT-09234 Vilnius (LT)
(74) Representative: Gerasimovic, Liudmila
(86) International application number: PCT/IB2021/056223
(87) International publication number: WO 2022/167853

(57) **Abstract**

The proposed technical solution relates to systems for vibration and/or acoustic monitoring of the operating modes of industrial equipment, particularly rotating mechanisms, using machine learning technology. The claimed device includes sensors for obtaining data about vibration and acoustic oscillations, data processing means capable of receiving and extracting from the data received from said sensors data about equipment operating modes, and machine learning means, connected to said data processing means, for identifying and/or memorizing equipment operating modes.

## Description

### Technical field

The proposed technical solution relates to systems for vibration and/or acoustic control of operating modes of industrial equipment, in particular, rotating mechanisms, using machine learning technology. A significant part of industrial equipment as main or auxiliary elements contains rotating parts, such as rotors, turbine shafts, bearings and similar mechanisms and parts. All of them, to some extent, are subject to wear and tear, which process during the operation of the equipment can cause unwanted vibration or acoustic vibrations that propagate throughout the equipment and into the environment. Some types of vibrations are indicative of serious equipment malfunctions, such as the imminent failure of certain parts, especially bearings of various types. This can lead to premature failure of the equipment itself, thus damaging the production process. Analysis of vibration and acoustic vibrations allows detecting malfunctions at an early stage of their development. In some cases it can help to identify the very cause of unwanted vibrations. However, vibration and acoustic patterns are a normal part of equipment operation due to the many moving parts and mechanisms involved. A change in the vibroacoustic signature of equipment can be associated with transition from one normal mode of operation of the equipment to another one, caused, for example, by a change in shaft speed. Therefore, there is a need for systems and methods that allow analyzing the modes of operation of the equipment in order to identify potentially dangerous modes for the normal operation of the equipment.

### Prior art

Traditional methods of equipment condition monitoring are based on detection of a situation when the values of vibration velocity or vibration acceleration exceed threshold values. This type of analysis requires data that represents both normal and emergency modes of operation of the equipment, i.e. specific values for certain components or units are required. Such data are obtained by calculation during the equipment design process or by experience during testing.

In the course of the search, inventions solving similar technical problems were found among the array of known technical solutions. Thus, a technical solution was found under the RU patent No. 2691225 "Device for measuring and assessing the technical condition of the equipment of machine-building complex" (IPC G01M 7/00, DGTU. RU appl. No/2018123580, 28.06.2018, publ. 11.06.2019). According to the description, the invention relates to devices of measuring technology, namely to devices for monitoring the technical condition of an object. The device comprises a housing including a monitoring module on a board with a microcontroller, an information storage module, an information analysis module, an information input/output module and a transceiver connected to external auxiliary equipment, a current sensor, a voltage sensor and a measuring head housing with temperature, noise and vibration sensors mounted on its housing.

The disadvantage of the specified technical solution is mobility, which does not provide for long-term observation of the state of the equipment, thus requiring the presence of an operator, who performs measurement, processing and interpretation of measurement results. It is known that defects of equipment with rotating parts do not appear sporadically, but over a certain, sometimes long, period of time and, thus, when using the specified technical solution it is impossible to assess the development of the defect in time.

An evolutionary stage in the development of equipment diagnostics systems is the use of modern neural network models capable of deep analysis of its operating modes. The technical solution is known according to the EP No. 3186598 «Monitoring of a device having a movable part" (IPC G01M13/04, G05B19/4065, Siemens AG, DE, EP appl.148733124A, 02/12/2014, k.02.12.2014, publ. 05.07.2017). According to the description this invention relates to monitoring of device having a movable part, in particular a rotating part, wherein the device comprises: a control module configured to receive a vibration signal of the device, equipped with a sensor, coupled to a device, providing a spectrum of the vibration signal, pre-processing the spectrum to determine base frequencies and side frequencies, wherein the base frequencies are frequencies whose peak power corresponds to the eigen frequencies of the device or to fault frequencies, and side frequencies correspond to other frequencies of the vibration signal. The base frequencies and side frequencies are then processed by applying a single class classification to the base frequencies and side frequencies separately, combining the results of the single class classifications, thereby obtaining a classification signal which represents a confidence level of 1, and outputting a decision support signal based on the classification signal; this decision support signal is indicating an error status of the device monitored.

However, the invention cited is also not without disadvantages, among which is the lack of the possibility of receiving information about the sound accompanying the equipment operation, since it is known that the sound corresponding to any defect is manifested in the early stages of damage to the equipment, until the moment when it is possible to detect deviations in the level of arising vibrations inherent in this type of defect. The disadvantages also include the requirement to know the frequencies of the fault, which is hardly possible when trying to detect defects previously unknown.

The closest to the claimed device is the system according to the US patent No. 7363111 "Methods and systems for analyzing engine unbalance conditions" (IPC G05B23/02, G01M1/38, Boeing Co., US appl. No.US70843707A, 20.02.2007, k.30.12.2003, publ. 22.04.2008). The invention discloses methods and systems for analyzing an engine unbalance condition. In one embodiment, the method comprises receiving data from vibration sensors from a plurality of locations distributed over the engine and surrounding engine support structure, and inputting said data into neural network inverse model. The model establishes a relationship between the vibration data and the engine unbalance condition, and outputs diagnostic information indicative of the engine unbalance condition. In an additional embodiment, the method further comprises processing the vibration data using a fast Fourier transform to extract the desired vibration data once per revolution before inputting it into the neural network inverse model. At the same time, the disadvantages of the said technical solution include the absence of any mention of the possibility of real-time retraining of the neural network, as well as the need to install a plurality of sensors and the lack of analysis of acoustic signals.

### Technical challenge

Thus, the existing state of the art does not contain information about devices and methods that solve the problem of creating a technological and reliable device and method of its operation, allowing to improve the ability to recognize abnormal and potentially emergency modes of operation of industrial equipment with rotating parts, which will reduce the frequency of failures due to early detection of malfunction, reduce downtime and avoid costly repairs of key elements of the equipment. An additional technical challenge is the portability of the device, allowing expanding the scope of its application.

### Solution for the challenge

In a general implementation, present device for vibroacoustic analysis of equipment, comprising rotating parts, is characterized by comprising at least one sensor for obtaining vibration data; data processing means capable of obtaining and extracting from the data, received from the sensors, data on modes of operation of the equipment; at least one sensor for obtaining acoustic vibrations data, and machine learning means, associated with the data processing means, for recognizing and/or memorizing the modes of operation of the equipment.

The features common with prior art cited are the presence of at least one sensor for obtaining data on vibration; data processing means with the ability to obtain and extract from the data, received from the sensors, information about the modes of operation of the equipment.

In general, the device is characterized in that it is equipped with at least one sensor for obtaining data on acoustic vibrations and machine learning means, associated with the data processing means, for recognizing and/or memorizing modes of operation of the equipment.

In a first particular embodiment, the device is configured capable of being fixed to the equipment in such a way, that the sensors are capturing vibration and acoustic vibrations data of the rotating parts.

In another particular embodiment, machine learning means are configured capable of clustering of data.

In a next specific embodiment, the device is equipped with a power supply.

In a further specific embodiment of the invention, the vibration sensor is configured capable of receiving vibration data along three axes.

In an extension of said particular embodiment, the vibration sensor is made in the form of an accelerometer.

In another particular embodiment, the sensor for acoustic vibration data acquisition is made in the form of a microphone.

In a next specific embodiment, the data processing means are made in the form of a SoC (system-on-chip).

It might be reasonable to execute machine learning means in the form of a neuromorphic chip.

In another specific variant of implementation of the invention, the extracted data are mathematically transformed sensors' signals formed into a feature vector.

It is advisable to equip the device with means of outputting information about the operation modes of the equipment.

### Positive effects of device of present application

In a general implementation the device comprises sensors, that dynamically acquire data on the vibration and acoustic components (signature) during operation of the equipment. These may be, for example, as indicated in particular cases, an accelerometer and a microphone, respectively. The data in the form of signals in digitized form is then fed to processing means, such as a computer system with a processor capable of performing analysis, mathematical transformations of the obtained data and transmitting them in processed form to machine learning means. By the processed form of data in the context of the present application is meant a feature vector X, comprising components extracted by mathematical, in particular, fast Fourier transforms and wavelet transforms, from signals received from vibration and acoustic vibrations sensors. By machine learning means the feature vector, arriving for analysis, is recognized and verified for the condition of being known to the specified machine learning means. In case if it is unknown, the feature vector is recorded and then clustered. The cluster is subsequently assigned a category. The use of machine learning means, based on a neuromorphic processor, for analysis of the feature vector allows to dynamically analyze the feature vectors, coming from the data processing means, and to obtain information about the modes of operation of equipment in real time. This information is necessary to assess the condition of the equipment and to make decisions on its maintenance.

In some embodiments, the device may be equipped with its own power supply, thus allowing to create a compact energy-independent from external sources solution, which is expedient to use as a portable diagnostic equipment for checking the condition of moving parts and mechanisms. At the same time, the device can also be used as a component of an equipment control system. In such a case, the requirements to its energy autonomy and transportability are not imposed. Thus, it can be integrated into the electrical circuit of the said control system.

The use of compact computer systems, in particular SoCs (System-on-crystal), as data processing means makes it possible to increase the manufacturability of the device, its computational efficiency and reduce the cost of manufacturing.

Providing the device with a means of outputting information about the operation of the equipment refers to the use of various interfaces for connection to peripheral equipment. As a standard interface it is proposed to use Ethernet. Additionally, a Wi-Fi interface can be implemented for connection to mobile devices based on Android^{®} and iOS^{®} systems.

The device may comprise a housing in which all its components are housed, thus solving the problem of portability. The power supply may be integrated into the housing or the device may be mains powered. In the preferred embodiment the sensors are located inside the housing to ensure portability of the device. When the sensors are equipped inside the housing, the housing may be provided with a stud, which fits into a suitable seating hole on the equipment to ensure better contact for transmission of vibroacoustic vibrations.

In general, absence of a large number of nodes and elements of the device ensures a high level of reliability.

### Description of the method of present application

The group of inventions also comprises a method, partially disclosed in the description of the device above. A method of vibroacoustic analysis of equipment, containing rotating parts, characterized by following features: obtaining by data processing means of information on vibration and/or acoustic vibrations of rotating parts of the equipment: mathematical processing of the obtained data with feature extraction; generating (forming) of a feature vector and transmitting to machine learning means for recognizing and/or memorizing.

In a first particular embodiment the method is characterized in that the machine learning means are clustering the recognized feature vectors.

In specification of said particular embodiment, the method is further characterized in that the machine learning means are assigning categories to the clusters, which categories are corresponding to modes of operation of the equipment.

In an other particular embodiment, the mathematical processing comprises extracting features from the acquired vibration and/or acoustic vibrations data via fast Fourier transforms, wavelet transforms, empirical mode decomposition, and empirical cumulative distribution function.

In a further particular embodiment, the data acquired by the sensors are digitized before being analyzed by data processing means.

In a fourth particular embodiment, the method provides outputting information about modes of operation of the equipment to data display means.

In other particular embodiment, if it is determined by machine learning means in recognizing a transmitted feature vector, that the feature vector is not learned by machine learning means, said feature vector is remembered/memorized and subsequently clustered by machine learning means.

### Positive effects of the method

The basis of the method is a block of mathematical transformations provided by extracting features from the data coming to the processing means from sensors; further recognition of the feature vector, generated (formed) according to the results of these transformations in the form of a feature description of data on vibration and acoustic oscillations, changing dynamically, and clustering by machine learning means of feature vectors into groups, united by common signatures. In this way, the task of training and further recognition of modes of operation of equipment is solved by reasonable means. The clusters may be assigned a category, allowing orientation in the recognized modes, and the possibility of outputting information, for example about abnormal modes, is provided. As noted in the description of the device, extraction of features from the initial data is performed by means of, in particular, fast Fourier transforms, wavelet transforms, allowing extracting the characterizing components from the signals from sensors. Categorization of clusters is performed in order to identify abnormal and potentially emergency modes of equipment operation. The features extracted from data coming from sensor(s) are obtained by mathematical transforming, including fast Fourier transformations, wavelet transformations, empirical mode decomposition, empirical cumulative distribution function. Data transforming by said methods allows identifying key features of signals, received from sensors, which subsequently allows, on the basis of the formed vectors, to determine the presence of abnormal mode of operation of the equipment in the vibroacoustic signature.

In order the information being perceived by an operator, the method may provide for outputting information, for example, about abnormal operation of the equipment, via an external interface to a peripheral device.

During operation of the method, at the step when feature vectors are recognized by machine learning means, the latter are programmed in such a way, that unknown from previous iterations (new) feature vectors are recorded by said means and automatically assigned into the corresponding clusters. If the recorded vector cannot be assigned to an existing cluster, a new cluster is created, and the specified vector is assigned to the newly created cluster. This allows identifying new modes of operation of equipment, which may be abnormal and lead to malfunctions of rotating parts of equipment.

### Brief description of the drawings

The proposed invention is explained by the following figures:
Fig. 1 shows principal scheme of device with integrated sensors and external power supply;
Fig. 2 shows scheme of device with remote sensors;
Fig. 3 illustrates scheme of device with remote sensors and external power supply;
Fig. 4 shows block diagram of the algorithm of vibroacoustic diagnostics.

### Description of positions in the drawings

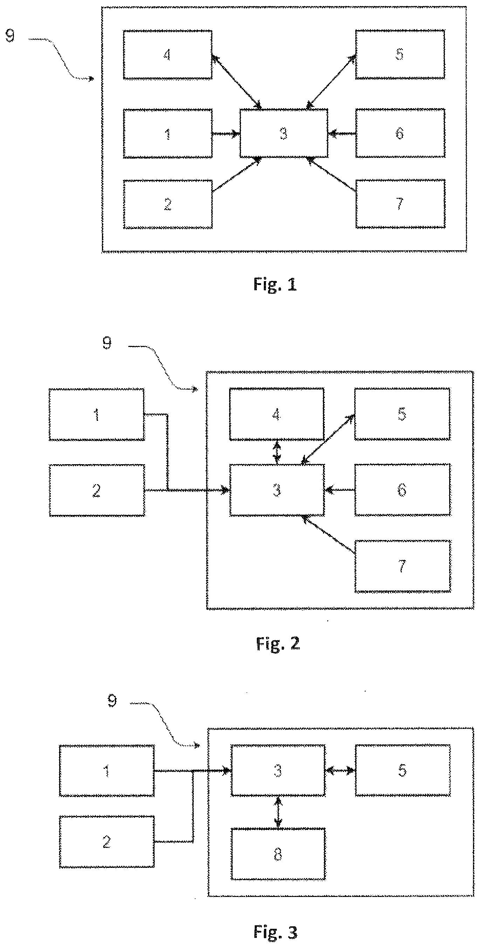

Figures 1-3 indicate the following positions:
1 - vibration sensor;
2 - sensor of acoustic vibrations;
3 - data processing means (SoC);
4 - RAM;
5 - machine learning means (neuromorphic processor);
6 - power supply;
7 - Interface;
8 - Wi-Fi and/or Bluetooth module;
9 - housing.

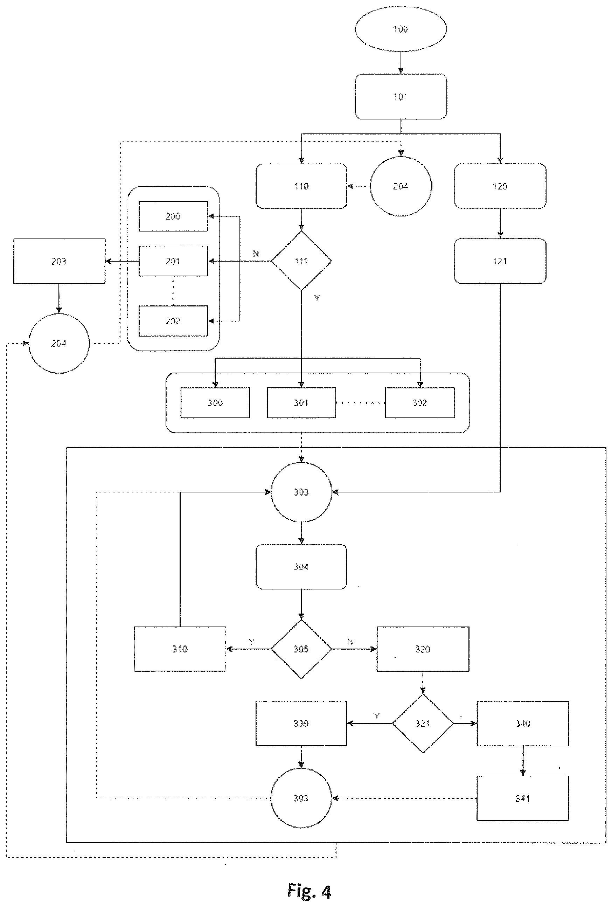

The contents of the blocks in Fig. 4 are given in the description below in disclosing particular implementations of the present group of inventions with respect to the operation of the method.

### Description of embodiments

To understand the principles of operation and features of the various implementations of the group of inventions, a description of the figures of the technical solution is given below. Although the text of the description explains in detail the preferred embodiments of the technical solution, it should be understood that other embodiments of the group of inventions are also possible. Accordingly, there is no need to limit the scope of legal protection of the technical solution exclusively to the presented implementations and lists of assemblies and components. At the same time, when describing the preferred embodiments of the technical solution, it is necessary to clarify the terms used in the description in order to make the basic principles of the invention clear to the skilled person.

It should be noted that device components and parts used in the singular in the description and claims are also representing plural forms, unless expressly stated otherwise. For example, an indication of a constituent element of a device also means an indication of a set (plurality) of such elements.

Also, in describing the preferred embodiments, special terms are used to ensure clarity of understanding. It is intended that the term be used in the broadest sense in which it can be interpreted by those skilled in the art and includes all technical equivalents used in the same manner and for the same purpose. Thus, in particular, the phrase "equipment containing rotating parts" means devices in which, when operated, some parts and/or mechanisms are rotatable. Such devices may include equipment containing shafts, turbines, drums, threshing and crushing devices. By vibration is meant mechanical vibrations of solid bodies in the frequency range of 1.6 - 1500 Hz; with respect to the present group of inventions, vibration refers to vibrations arising from the operation of equipment with movable, mainly rotating, parts. Under acoustic vibrations are understood vibrations of elastic medium: air, solid bodies, causing propagation of elastic waves therein in the range from 6 to 20 000 Hz. Data processing means are understood as a set of hardware and software designed to receive, analyze, process, transform data, in particular, coming from vibration and acoustic vibrations sensors. In general, these means can be designed as an electronic device, equipped with a processor and memory, executing the corresponding program code. Under the information extraction is meant realization of such mathematical transformations over the data received from sensors, the result of which leads to the possibility of obtaining information about the mode of operation of the equipment. Machine learning means a hardware-software system using neural network models for recognition, recording and grouping of sensors' data subjected to mathematical transformations. Clustering means the distribution of a given sample of objects into non-overlapping subsets in such a way, that each cluster consists of similar objects, while objects of different clusters differ. By feature vector is meant a method of inputting data to a machine learning means, wherein vector is formed consisting of values (features) corresponding to a set of features describing an object. The object, in the context of the present invention, is vibration and acoustic data, obtained from sensors. The values from which the vector is formed are obtained by performing mathematical transformations of said data. The term "memorizing" as referred to the operation of machine learning means, characterizes the recording and subsequent clustering of a feature vector received for analysis.

The wordings "comprising", "including" mean that at least said component, element, part or method step is present in the object or process, but does not preclude the presence of other components, materials, parts, method steps, even if such component, material, part, method step performs the same function as said component, material, part, method step.

The materials from which the various elements of the present group of inventions are made, which are mentioned below in the description of examples of a particular embodiment of the system, are typical but not mandatory for use. The system components indicated in the present example embodiments may be replaced by numerous analogs that perform the same function, as the described examples of the system and methods, used in the description.

### Examples

Hereinafter described is an electronic device, implementing a vibroacoustic analysis method for detecting faults in bearings and gears of industrial equipment. The device employs an unsupervised self-learning algorithm for early detection of faults in industrial equipment, based on a combined vibroacoustic analysis algorithm of signal(s) clustering and further recognition using a NM500 neuromorphic chip. At the step of setup and training, the device studies data without information about types of failures, and when the studied modes of operation of units or assemblies converge to a certain number - it is assumed that the device has studied all regular modes of operation of the equipment. Then, during operation, the distances between clusters of input processed data are compared with previously studied data (centers of clusters), using the NM500 chip. If the numerical vector, formed of the features of the current cluster, characterizing the mode of operation of the equipment, does not coincide with previously learned vectors, formed on the same principle - it is concluded that there is a new, not previously known mode of operation of the equipment. Thus, the device is capable of detecting anomalous new data that were previously unknown. At the same time, an assumption is made that the categories (clusters) detected and learned at the training stage are categories, that can be attributed to the normal operation modes of the equipment. If, when the device is operating after the training stage is completed, the newly formed cluster, that appeared during recognition of features, belongs to the category of new and unknown, this is reported to the operating personnel.

The proposed device refers to electronic devices with internal software, designed to process vibration acceleration along three axes and sound signature coming from the three-axis accelerometer and microphone, located inside the housing.

In one of the particular embodiment, in accordance with the principal scheme of the components presented in Fig.1, the device is structurally made in a housing with dimensions 50x50x40 mm, in the base of which is fixed a metal threaded stud, used for fastening on the industrial equipment (by screwing into the equipment), through which vibration and acoustic vibrations of the controlled equipment are transmitted. The housing can be made of any material that does not have significant vibration-absorbing properties. In the particular case under consideration, the base of the housing is made of metal. Inside the housing 9 there is an accelerometer 1, which fixes vibration readings, a microphone 2 of a wide spectrum for capturing acoustic vibrations of the equipment during operation. These sensors are connected by electrically conductive circuits with a single-chip system ZYNQ 7020 3, made on a printed circuit board, containing appropriate connectors for connecting peripheral equipment, in this case, sensors, and soldered on the board RAM module 4. The RAM 4 may also be soldered on the board without being removable. The system 3 is connected via a cross-connector on the PCB to the NM500 neuromorphic processor 5. The system is powered by means of a power supply 6 built into the housing, connected to the printed circuit board via an appropriate power supply circuit. The printed circuit board also includes at least one interface connector 7 for transmitting the processed data to other devices, such as personal computers, terminals, mobile devices. In a particular case, the interface is an Ethernet connector.

In another particular embodiment, illustrated schematically in Fig. 2, the accelerometer 1 and microphone 2 are placed outside the housing. Accordingly, in such an implementation, either connectors for connecting cables, leading from the sensors, must be provided in the housing 9, or the device must be equipped with components enabling wireless transmission of data from the sensors 1, 2 to the single-chip system 3. These may be transceivers operating according to Wi-Fi, Bluetooth or other similar standards. At the same time, it is necessary to provide high noise immunity of data transmission protocols and availability of own power supplies for sensors 1, 2. The rest structure of device repeats one described in Fig. 1.

Further, in another particular embodiment schematically shown in. Fig. 3, the device, in the remaining part of the constructional design, can be made according to both Fig. 1 and Fig. 2, but the difference lies in the use of a Wi-Fi/Bluetooth module 8 which can be made in the housing. By means of said module, it is possible to transmit diagnostic information about the status of the equipment in the form of, for example, error codes or insecure modes to mobile devices or terminals.

The device operates as follows. In a particular embodiment, the stud of the device body is installed in the corresponding socket of the equipment being diagnosed. During operation of the equipment, vibration and acoustic vibrations, propagating through the equipment and into the environment, are captured by a three-axis accelerometer 1 and a microphone 2, digitized by means of the sensors themselves or transmitted for digitization to a single-chip system ZYNQ 7020 3 for analysis. The system 3 performs mathematical transformations with the obtained data, extracting features therefrom and forming a vector from the extracted features, thus composing a feature description of the object. RAM 4 serves for program execution, storing the executed program, as well as for storing input, output and intermediate data processed by the system 3. The obtained feature vector is transferred for analysis to machine learning tools - NM500 neuromorphic processor 5, which performs recognition of the feature vector and clustering thereof. Further, the distances between clusters of input processed data are compared with previously learned data (centers of clusters) using NM500. If the feature vector composed of the features of the current cluster, characterizing the mode of operation of the equipment, does not match with previously learned vectors, composed on the same principle - a conclusion is made about the presence of a new, not previously known mode of operation of the equipment.

The method, as illustrated on Fig. 4, comprises the following operations. Step 100 - power supply and start running the algorithm (fixing the device on the equipment to be diagnosed), provided that the device is mounted on the equipment. At step 101, initial data input for the specific equipment is performed, in blocks 110, 120 in the dynamic mode receive data from vibration sensors, on three axes, and acoustic vibrations, respectively. In block 111 the initialization is checked - the procedure of assigning parameters of mathematical algorithms necessary for further data processing. If initialization was not performed, then in blocks 200...202 initialization of parameters of mathematical algorithms is performed in accordance with the initial parameters of the equipment, known at step 101. By transforming the data at the output of block 203, a description of the characteristics of the signal is obtained, which allows further analysis. It should be noted that diagnostic information about the current mode of operation of the monitored equipment is not available until the equipment is monitored for a certain period of time. This is necessary for dynamic determination of upper and lower limits of the incoming signal and adjustment to the characteristics of the input signal and should be performed continuously during the operation of the device.

In blocks 300, ...302 data processing means are performing various mathematical transformations, in particular, fast Fourier transforms, wavelet transforms, empirical mode decomposition, empirical cumulative distribution function, for extracting of features from the data received for processing, and forming a feature vector. The formed feature vector 303 is input to block 304, where further machine learning means are used to recognize and verify the knownness of the specified vector 305. If the vector is known, then in step 310 it is discarded and return to the stage 303 occurs, where a new feature vector is formed. If the feature vector is unknown, it is recorded by machine learning means and at step 321 its belonging to one of the existing clusters is determined. If the feature vector can be assigned to an existing cluster, at step 330 the recording is performed, then returns to the step of obtaining a new feature vector 303. If the vector cannot be assigned to an existing cluster, then step 340 creates a new cluster, assigns the vector to the created cluster 341, and returns to step 303.

### Industrial applicability

The embodiments of the present invention are not limited to the above examples of specific embodiments. Other forms of realization of the technical solution may be proposed without departing from the scope of present invention. Variants of the invention may provide for the implementation of the device with remote sensors, as schematically shown in Figs. 2, 3, the implementation of the device with a wireless interface Wi-Fi or Bluetooth, the possibility of installing a piezoceramic ultrasound sensor to obtain an acoustic signature in the ultrasonic range.

The above disclosed examples of embodiments are given to demonstrate the industrial applicability of the device and to give a general impression of the capabilities of the proposed device. The scope of legal protection of the technical solution is determined by the claims and not by the description provided, and all modifications made with the use of equivalent features fall within the legal protection of the present invention.

## Claims

1. A device for vibroacoustic analysis of equipment with rotating parts, comprising at least one sensor for obtaining vibration data, data processing means with the possibility of obtaining and extracting received from the sensors data on modes of operation of the equipment, **characterized in that** it is equipped with at least one sensor for obtaining data on acoustic vibrations and machine learning means, associated with the data processing means,for recognizing and/or memorizing modes of operation of the equipment.

2. The device according to Claim 1, **characterized in that** it is configured capable of being fixed to the equipment in such a way, that the sensors are capturing vibration and acoustic data of the rotating parts.

3. The device according to Claim 1, **characterized in that** the machine learning means are configured capable of clustering the data.

4. The device according to Claim 1, **characterized in that** it is equipped with a power supply.

5. The device according to Claim 1, **characterized in that** the vibration sensor is configured capable of receiving vibration data along three axes.

6. The device according to Claim 5, **characterized in that** the vibration sensor is made in the form of an accelerometer.

7. The device according to Claim 1, **characterized in that** the sensor for acquisition data on acoustic vibration is made in the form of a microphone.

8. The device according to Claim 1, **characterized in that** the data processing means are made in the form of a system-on-chip (SoC).

9. The device according to Claim 1, **characterized in that** the machine learning means are made in the form of a neuromorphic chip.

10. The device according to Claim 1, **characterized in that** the extracted data are mathematically transformed sensors' signals formed into a feature vector.

11. The device according to Claim 1, **characterized in that** it is equipped with means for outputting information about the modes of operation of the equipment.

12. A method of vibroacoustic analysis of equipment with rotating parts, which method comprises obtaining by data processing means of information on vibration and/or acoustic vibrations of rotating parts of the equipment, mathematical processing of the obtained data with feature extraction, forming of a feature vector and transmitting to machine learning means for recognition and/or memorizing.

13. The method according to Claim 12, **characterized in that** the machine learning means are clustering the recognized feature vectors.

14. The method according to Claim 13, **characterized in that** the machine learning means are assigning to the clusters categories, corresponding to modes of operation of the equipment.

15. The method according to Claim 12, **characterized in that** the mathematical processing comprises extracting features from the acquired data on vibration and/or acoustic vibration by means of fast Fourier transforming, wavelet transforming, empirical mode decomposition, and empirical cumulative distribution function.

16. The method according to Claim 12, **characterized in that** the data acquired by the sensors are digitized before analysis by the data processing means.

17. The method according to Claim 12, **characterized by** providing outputting information about modes of operation of the equipment to the data display means.

18. The method according to Claim 12, **characterized in that**, when it is determined by the machine learning means during recognition of the transmitted feature vector that the feature vector is not learned by the machine learning means, said feature vector is memorized by the machine learning means, and subsequently clustered.

## Amended claims

### Amended claims under Art. 19.1 PCT

1. A device for vibroacoustic analysis of threshing and crushing equipment, comprising at least one sensor for obtaining vibration data, data processing means with the possibility of obtaining and extracting received from the sensors data on modes of operation of the equipment, **characterized in that** it is equipped with at least one sensor for obtaining data on acoustic vibrations and machine learning means, associated with the data processing means,for recognizing and/or memorizing modes of operation of the equipment.

2. The device according to Claim 1, **characterized in that** it is configured capable of being fixed to the equipment in such a way, that the sensors are capturing vibration and acoustic data of the rotating parts.

3. The device according to Claim 1, **characterized in that** the machine learning means are configured capable of clustering the data.

4. The device according to Claim 1, **characterized in that** it is equipped with a power supply.

5. The device according to Claim 1, **characterized in that** the vibration sensor is configured capable of receiving vibration data along three axes.

6. The device according to Claim 5, **characterized in that** the vibration sensor is made in the form of an accelerometer.

7. The device according to Claim 1, **characterized in that** the sensor for acquisition data on acoustic vibration is made in the form of a microphone(s).

8. The device according to Claim 1, **characterized in that** the data processing means are made in the form of a system-on-chip (SoC).

9. The device according to Claim 1, **characterized in that** the machine learning means are made in the form of a neuromorphic chip.

10. The device according to Claim 1, **characterized in that** the extracted data are mathematically transformed sensors' signals formed into a feature vector.

11. The device according to Claim 1, **characterized in that** it is equipped with means for outputting information about the modes of operation of the equipment.

12. A method of vibroacoustic analysis of threshing and crushing equipment, which method comprises obtaining by data processing means of information on vibration and/or acoustic vibrations of rotating parts of the equipment, mathematical processing of the obtained data with feature extraction, forming of a feature vector and transmitting to machine learning means for recognition and/or memorizing.

13. The method according to Claim 12, **characterized in that** the machine learning means are clustering the recognized feature vectors.

14. The method according to Claim 13, **characterized in that** the machine learning means are assigning to the clusters categories, corresponding to modes of operation of the equipment.

15. The method according to Claim 12, **characterized in that** the mathematical processing comprises extracting features from the acquired data on vibration and/or acoustic vibration by means of fast Fourier transforming, wavelet transforming, empirical mode decomposition, and empirical cumulative distribution function.

16. The method according to Claim 12, **characterized in that** the data acquired by the sensors are digitized before analysis by the data processing means.

17. The method according to Claim 12, **characterized by** providing outputting information about modes of operation of the equipment to the data display means.

18. The method according to Claim 12, **characterized in that**, when it is determined by the machine learning means during recognition of the transmitted feature vector that the feature vector is not learned by the machine learning means, said feature vector is memorized by the machine learning means, and subsequently clustered.
